# EUROPEAN PATENT APPLICATION

(11) **EP 3 972 164 A1**
(43) Date of publication of application: **23.03.2022**
(21) Application number: 20821941.0
(22) Date of filing: 10.06.2020
(51) Int. Cl.: H04L 1/00

(54) **METHOD AND APPARATUS FOR TRANSMITTING RESPONSE INFORMATION**

(30) Priority: 14.06.2019 CN 201910516401
(71) Applicant: Huawei Technologies Co., Ltd., Longgang District Shenzhen, Guangdong 518129 (CN)
(72) Inventor: MA, Ruixiang, Shenzhen, Guangdong 518129 (CN); GUAN, Lei, Shenzhen, Guangdong 518129 (CN); LI, Shengyu, Shenzhen, Guangdong 518129 (CN)
(74) Representative: Isarpatent
(86) International application number: PCT/CN2020/095478
(87) International publication number: WO 2020/249031

(57) **Abstract**

A response information transmission method and an apparatus are provided, to resolve a problem as to how a terminal device feeds back response information to reduce blind detection complexity of a network device. After receiving first downlink data from a network device, a terminal device transmits the first downlink data in a semi-persistent scheduling manner, and determines, based on a transmission status of first response information of the first downlink data, whether to send the first response information to the network device. The transmission status may include two states: One state represents that the first response information and first uplink information are to be simultaneously transmitted in a first time unit, and the other state represents that the first response information is to be separately transmitted in the first time unit. In this case, the network device determines, based on the transmission status of the first response information, whether to receive the first response information, thereby reducing blind detection complexity of the network device.

## Description

### CROSS-REFERENCE TO RELATED APPLICATIONS

This application claims priority to Chinese Patent Application No. 201910516401.5, filed with the China National Intellectual Property Administration on June 14, 2019 and entitled "RESPONSE INFORMATION TRANSMISSION METHOD AND APPARATUS", which is incorporated herein by reference in its entirety.

### TECHNICAL FIELD

Embodiments of this application relate to the field of communication technologies, and in particular, to a response information transmission method and an apparatus.

### BACKGROUND

Compared with previous generations of mobile communication systems, a 5th generation (5th generation, 5G) mobile communication system imposes higher requirements on a transmission rate, a latency, power consumption, and the like. Enhanced mobile broadband (enhanced mobile broadband, eMBB), massive machine-type communications (massive machine-type communications, mMTC), and ultra-reliable low-latency communication (ultra-reliable low-latency communication, URLLC) are defined as three typical 5G services.

As one of the three typical 5G services, URLLC is mainly applied to scenarios such as self-driving and telemedicine. These application scenarios impose stricter requirements on reliability and a latency. Specific requirements of the URLLC service include: 99.999% of data transmission reliability, a transmission latency of less than 1 ms, and instruction overheads reduced as much as possible while requirements for high reliability and a low latency are met. Therefore, how to ensure a low latency and high reliability of the URLLC service and reduce signaling overheads becomes a problem that is of great concern in the field.

To ensure a low latency and high reliability of the URLLC service and reduce the signaling overheads, a network device may send data by using a semi-persistent scheduling (semi-persistent scheduling, SPS) technology. However, how a terminal device feeds back response information of semi-persistently scheduled data, so that the network device can identify whether the terminal device correctly receives the data, and implementation complexity of the network device can be further reduced remains to be studied.

### SUMMARY

This application provides a response information transmission method and an apparatus, to resolve a problem as to how a terminal device feeds back response information.

According to a first aspect, an embodiment of this application provides a response information transmission method. The method may be applied to a terminal device or a chip in the terminal device, and may specifically include: first, receiving first downlink data from a network device, where the first downlink data is transmitted in a semi-persistent scheduling manner; and then determining, based on a transmission status of first response information of the first downlink data, whether to send the first response information to the network device. The transmission status of the first response information includes a first state and a second state, the first state represents that the first response information and first uplink information are to be simultaneously transmitted in a first time unit, and the second state represents that the first response information is to be separately transmitted in the first time unit. In this manner, the terminal device determines, based on a transmission status of response information, whether to send the response information, so that the network device can determine, based on the transmission status, whether to blindly detect the response information, and blind detection complexity of the network device can be reduced.

In a possible design, the first state may be a state that satisfies either of the following conditions: a first time-frequency resource used to transmit the first response information overlaps a second time-frequency resource used to transmit the first uplink information in time domain, where the first uplink information is second response information or to-be-sent uplink data information, and the second response information is response information of second downlink data; or the first response information and the first uplink information are transmitted by using a same codebook, where the first uplink information is the second response information.

In a possible design, the second state may be a state that satisfies either of the following conditions: the first time-frequency resource and the second time-frequency resource do not overlap in time domain, where the first uplink information is the second response information or the to-be-sent uplink data information; or only the first response information is to be transmitted in the first time unit.

In a possible design, the determining, based on a transmission status of first response information of the first downlink data, whether to send the first response information to the network device includes: when the transmission status of the first response information is the second state, determining not to send the first response information to the network device.

For example, the first response information may be an acknowledgement. In the foregoing design, when the first response information is to be separately transmitted in the first time unit, the first response information may not be sent to the network device, so that uplink transmit power can be lowered, and interference can be reduced. In addition, the network device determines, based on the transmission status of the response information, whether sent downlink data is successfully decoded on the terminal device, and the network device can determine, in advance based on the transmission status of the response information, a quantity of bits fed back by the terminal device, so that an uplink time-frequency resource on which blind detection is performed can be determined, detection complexity of the network device can be reduced, and a blind detection delay can be reduced.

In a possible design, the determining, based on a transmission status of first response information of the first downlink data, whether to send the first response information to the network device includes: when the transmission status of the first response information is the first state, determining to send the first response information to the network device. For example, the first response information may be an acknowledgement. In the foregoing design, the terminal device does not change a quantity of bits of a feedback codebook based on whether the first downlink data is correctly decoded, but feeds back the same quantity of bits of the feedback codebook regardless of whether the first downlink data is correctly decoded. In this case, the terminal device can determine, based on a quantity of bits of a response codebook, a PUCCH resource for carrying the response codebook, and the network device can further determine, based on the quantity of bits of the response codebook, the PUCCH resource for carrying the response codebook, and perform blind detection on the determined PUCCH resource. This reduces the detection complexity of the network device, and further reduces a processing delay. In addition, the network device can accurately determine, based on the response codebook, whether the first downlink data sent in the SPS manner is correctly decoded on the terminal device side.

In a possible design, the first uplink information is the second response information, the second response information is the response information of the second downlink data, and the determining, based on a transmission status of first response information of the first downlink data, whether to send the first response information to the network device includes: when the first time-frequency resource used to transmit the first response information overlaps the second time-frequency resource used to transmit the second response information in time domain, and a priority of the first response information is higher than a priority of the second response information, sending the first response information to the network device on the first time-frequency resource, and skipping sending the second response information to the network device. For example, the first response information is an acknowledgement. In the foregoing design, when the first time-frequency resource used to transmit the first response information overlaps the second time-frequency resource used to transmit the second response information in time domain, the second response information with a low priority is dropped, and the first response information is sent to the network device even if the first response information is an acknowledgement. In this case, the network device can accurately determine, based on the response information sent by the terminal device, whether the first downlink data is correctly decoded on the terminal device side. In addition, the network device does not need to blindly detect the second response information with a low priority, so that a waste of resources is reduced and the blind detection complexity of the network device is reduced.

In a possible design, the first uplink information is the second response information, the second response information is the response information of the second downlink data, and the determining, based on a transmission status of first response information of the first downlink data, whether to send the first response information to the network device includes: when the first time-frequency resource used to transmit the first response information overlaps the second time-frequency resource used to transmit the second response information in time domain, sending the first response information and the second response information to the network device on a third time-frequency resource, where at least one of the first response information and the second response information is an acknowledgement. In the foregoing design, the terminal device does not need to determine the PUCCH resource based on whether the first downlink data is correctly decoded. The determined PUCCH resource is the same regardless of whether the first downlink data is correctly decoded. Correspondingly, the network device can determine the PUCCH resource, and does not need to perform blind detection when receiving the response information on the determined PUCCH resource, so that the detection complexity of the network device is lowered, and the processing delay is reduced. In addition, the network device can accurately determine, based on the response codebook, whether the downlink data sent in the SPS manner is correctly decoded on the terminal device side, thereby ensuring data transmission reliability.

In a possible design, the first uplink information is the second response information, the second response information is the response information of the second downlink data, and the determining, based on a transmission status of first response information of the first downlink data, whether to send the first response information to the network device includes: when the first time-frequency resource used to transmit the first response information overlaps the second time-frequency resource used to transmit the second response information in time domain, a priority of the first response information is higher than a priority of the second response information, and the first response information is an acknowledgement, skipping sending the first response information to the network device, and sending the second response information to the network device on the second time-frequency resource. For example, the second response information is an acknowledgement. In the foregoing design, when the first response information is an acknowledgement, the second time-frequency resource is used to transmit the second response information. This can improve resource utilization and improve the data transmission reliability.

For example, the first response information in the first aspect is an acknowledgement. The solution described in the first aspect is a solution provided for a problem existing in a manner of skipping an acknowledgement. It should be understood that, in the solution described in the first aspect, the first response information may alternatively be a negative acknowledgement. In this case, this solution is provided for a problem existing in a manner of skipping a negative acknowledgement.

In addition, for a problem existing in a manner of skipping an HARQ-ACK, if the transmission status of the first response information is the second state, the terminal device does not send the first response information to the network device, regardless of whether the first response information is an acknowledgement or a negative acknowledgement. In this case, the network device does not receive the first response information from the terminal device, either. If the transmission status of the response information is the first state, the terminal device sends the first response information to the network device, regardless of whether the first response information is an acknowledgement or a negative acknowledgement.

According to a second aspect, an embodiment of this application provides a response information transmission method. The method may be applied to a network device or a chip in the network device, and may be specifically: sending first downlink data to a terminal device, where the first downlink data is transmitted in a semi-persistent scheduling manner; and determining, based on a transmission status of first response information, whether to receive the first response information from the terminal device, where the first response information is response information of the first downlink data, where the transmission status of the first response information includes a first state and a second state, the first state represents that the first response information and first uplink information are to be simultaneously transmitted in a first time unit, and the second state represents that the first response information is to be separately transmitted in the first time unit.

In a possible design, the first state is a state that satisfies either of the following conditions: a first time-frequency resource used to transmit the first response information overlaps a second time-frequency resource used to transmit the first uplink information in time domain, where the first uplink information is second response information or to-be-sent uplink data information, and the second response information is response information of second downlink data; or the first response information and the first uplink information are transmitted by using a same codebook, where the first uplink information is the second response information.

The second state is a state that satisfies either of the following conditions: the first time-frequency resource and the second time-frequency resource do not overlap in time domain, where the first uplink information is the second response information or the to-be-sent uplink data information; or only the first response information is to be transmitted in the first time unit.

In a possible design, the determining, based on a transmission status of first response information of the first downlink data, whether to receive the first response information from the terminal device includes: when the transmission status of the first response information is the second state, determining not to receive the first response information from the terminal device. For example, the first response information is an acknowledgement.

In a possible design, the determining, based on a transmission status of first response information of the first downlink data, whether to receive the first response information from the terminal device includes: when the transmission status of the first response information is the first state, determining to receive the first response information from the terminal device. For example, the first response information is an acknowledgement.

In a possible design, the first uplink information is the second response information, the second response information is the response information of the second downlink data, and the determining, based on a transmission status of first response information of the first downlink data, whether to receive the first response information from the terminal device includes: when the first time-frequency resource used to transmit the first response information overlaps the second time-frequency resource used to transmit the second response information in time domain, and a priority of the first response information is higher than a priority of the second response information, receiving the first response information from the terminal device on the first time-frequency resource, and skipping receiving the second response information from the terminal device on the second time-frequency resource. For example, the first response information is an acknowledgement.

In a possible design, the first uplink information is the second response information, the second response information is the response information of the second downlink data, and the determining, based on a transmission status of first response information of the first downlink data, whether to receive the first response information from the terminal device includes: when the first time-frequency resource used to transmit the first response information overlaps the second time-frequency resource used to transmit the second response information in time domain, receiving the first response information and the second response information from the terminal device on a third time-frequency resource, where at least one of the first response information and the second response information is an acknowledgement.

In a possible design, the first uplink information is the second response information, and the second response information is the response information of the second downlink data sent to the terminal device; and the determining, based on a transmission status of first response information of the first downlink data, whether to receive the first response information from the terminal device includes: when the first time-frequency resource used to transmit the first response information overlaps the second time-frequency resource used to transmit the second response information in time domain, and a priority of the first response information is higher than a priority of the second response information, and when the first response information from the terminal device is not received on the first time-frequency resource, determining that the first response information is an acknowledgement, and receiving the second response information from the terminal device on the second time-frequency resource.

For example, the first response information in the second aspect is an acknowledgement. The solution described in the second aspect is a solution provided for a problem existing in a manner of skipping an acknowledgement. It should be understood that, in the solution described in the second aspect, the first response information may alternatively be a negative acknowledgement. In this case, this solution is provided for a problem existing in a manner of skipping a negative acknowledgement.

In addition, for a problem existing in a manner of skipping an HARQ-ACK, if the transmission status of the first response information is the second state, the terminal device does not send the first response information to the network device, regardless of whether the first response information is an acknowledgement or a negative acknowledgement. In this case, the network device does not receive the first response information from the terminal device, either. If the transmission status of the response information is the first state, the terminal device sends the first response information to the network device, regardless of whether the first response information is an acknowledgement or a negative acknowledgement.

For a description of beneficial effects of the second aspect, refer to the description of the first aspect. Details are not described herein again.

According to a third aspect, this application provides a communication apparatus. The communication apparatus is applied to a terminal device or a chip of the terminal device, and includes units or means (means) configured to perform the steps in the first aspect.

According to a fourth aspect, this application provides a communication apparatus. The communication apparatus is applied to a network device or a chip of the network device, and includes units or means (means) configured to perform the steps in the second aspect.

According to a fifth aspect, this application provides a communication apparatus. The communication apparatus is applied to a terminal device or a chip of the terminal device, and includes at least one processing element and at least one storage element. The at least one storage element is configured to store a program and data, and the at least one processing element is configured to perform the method provided in the first aspect of this application.

According to a sixth aspect, this application provides a communication apparatus. The communication apparatus is applied to a network device or a chip of the network device, and includes at least one processing element and at least one storage element. The at least one storage element is configured to store a program and data, and the at least one processing element is configured to perform the method provided in the second aspect of this application.

According to a seventh aspect, this application provides a communication apparatus. The communication apparatus is applied to a terminal device, and includes at least one processing element (or chip) configured to perform the method in the first aspect.

According to an eighth aspect, this application provides a communication apparatus. The communication apparatus is applied to a network device, and includes at least one processing element (or chip) configured to perform the method in the second aspect.

According to a ninth aspect, this application provides a computer program product. The computer program product includes computer instructions; and when the computer instructions are executed by a computer, the computer is enabled to perform the method in any one of the foregoing aspects.

According to a tenth aspect, this application provides a computer-readable storage medium. The storage medium stores computer instructions; and when the computer instructions are executed by a computer, the computer is enabled to perform the method in any one of the foregoing aspects.

### BRIEF DESCRIPTION OF DRAWINGS

FIG. 1 is a schematic diagram of an architecture of a possible communication system according to an embodiment of this application;
FIG. 2 is a schematic diagram of a resource for receiving downlink data by a terminal device in an SPS manner according to an embodiment of this application;
FIG. 3 is a schematic diagram of a response information feedback in scenario 1 according to an embodiment of this application;
FIG. 4 to FIG. 7 are schematic diagrams of response information feedbacks in scenario 2 according to an embodiment of this application;
FIG. 8 is a schematic flowchart of a response information transmission method according to an embodiment of this application;
FIG. 9 is a schematic diagram of a response information feedback in example 1 according to an embodiment of this application;
FIG. 10 is a schematic diagram of a response information feedback in Embodiment 1 in example 2 according to an embodiment of this application;
FIG. 11 is a schematic diagram of a response information feedback in Embodiment 2 in example 2 according to an embodiment of this application;
FIG. 12 is a schematic diagram of a communication apparatus 1200 according to an embodiment of this application;
FIG. 13 is a schematic diagram of a communication apparatus 1300 according to an embodiment of this application;
FIG. 14 is a schematic diagram of a network device according to an embodiment of this application; and
FIG. 15 is a schematic diagram of a terminal device according to an embodiment of this application.

### DESCRIPTION OF EMBODIMENTS

It should be understood that "an embodiment", "an implementation", or "an example" mentioned in the entire specification means that particular features, structures, or characteristics related to embodiments are included in at least one embodiment of this application. Therefore, "in an embodiment", "in an implementation", "in an implementation", or "in an example" appearing throughout the entire specification does not necessarily refer to a same embodiment. In addition, these particular features, structures, or characteristics may be combined in one or more embodiments by using any appropriate manner. It should be understood that sequence numbers of the foregoing processes do not mean execution orders in various embodiments of this application. The execution orders of the processes should be determined based on functions and internal logic of the processes, and should not be construed as any limitation on the implementation processes of the embodiments of this application.

In addition, the terms "system" and "network" may be used interchangeably in this specification. The term "and/or" in this specification describes only an association relationship for associated objects and represents that three relationships may exist. For example, A and/or B may represent the following three cases: Only A exists, both A and B exist, and only B exists. In addition, the character "/" in this specification usually indicates an "or" relationship between the associated objects. The term "at least one" in this application means one or more than one, namely, including one, two, three, or more, and the term "a plurality of' means two or more than two, namely, including two, three, or more. In addition, it should be understood that, in the description of this application, terms "first", "second", and the like are only used for a purpose of distinguishing between descriptions, but cannot be understood as an indication or implication of relative importance, and cannot be understood as an indication or implication of a sequence. "At least one of the following items (pieces)" or a similar expression thereof means any combination of these items, including any combination of a singular item (piece) or plural items (pieces). For example, at least one of a, b, or c may indicate: a, b, c, a-b, a-c, b-c, or a-b-c, where a, b, and c may be singular or plural. It should be understood that in the embodiments of this application, "B corresponding to A" indicates that B is associated with A, and B may be determined according to A. However, it should further be understood that determining A according to B does not mean that B is determined according to A only; that is, B may also be determined according to A and/or other information. Moreover, terms "include" and "have" in the embodiments of this application, the claims, and the accompanying drawings are inclusive. For example, a process, a method, a system, a product, or a device including a series of steps or units is not limited to the listed steps or units, and may further include steps or units that are not listed.

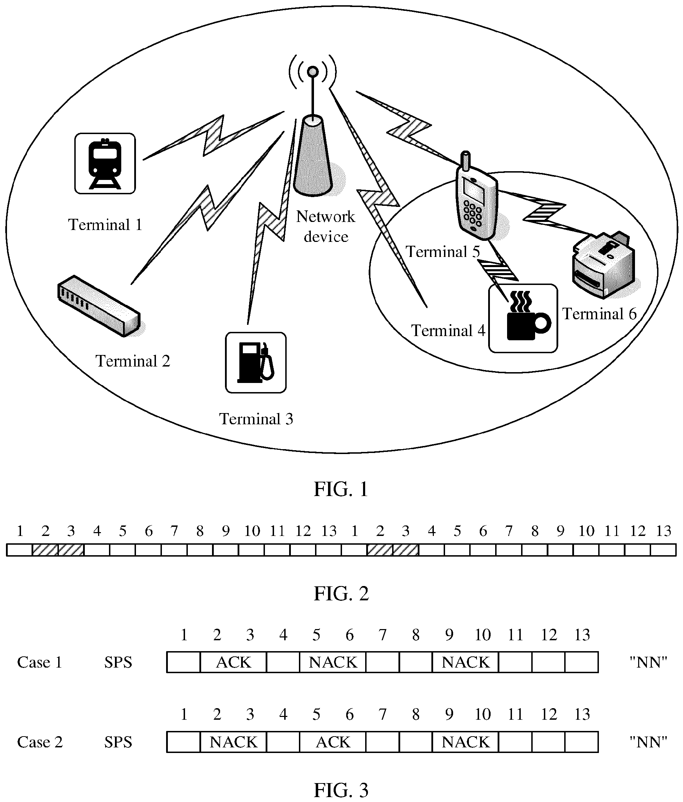

FIG. 1 shows a communication system 100 according to an embodiment of this application. The communication system 100 may include a network device and a terminal device. Quantities of network devices and terminal devices included in the communication system are not limited in this embodiment of this application. For example, FIG. 1 includes six terminal devices, which are respectively a terminal device 1 to a terminal device 6. FIG. 1 is merely a schematic diagram. The communication system may further include another network device, for example, may further include a core network device, a wireless relay device, and a wireless backhaul device, which are not drawn in FIG. 1. The network device may provide a radio access related service for the terminal device, to implement one or more of the following functions: a radio physical layer function, resource scheduling and radio resource management, quality of service (quality of service, QoS) management, radio access control, and a mobility management function. The terminal device may communicate with the network device through an air interface.

The network device is an access device that is used by the terminal device to access the mobile communication system in a wireless manner, and may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. The network device may be a module or a unit that completes some functions of the base station. For example, the network device may be a central unit (central unit, CU), or may be a distributed unit (distributed unit, DU). A specific technology and a specific device form that are used by the network device are not limited in the embodiments of this application.

The terminal device may also be referred to as a terminal (Terminal), user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in the embodiments of this application.

The network device and the terminal device may be deployed on the land, including an indoor device, an outdoor device, a handheld device, or a vehicle-mounted device; may be deployed on the water; or may be deployed on an airplane, a balloon, and a satellite in the air. Application scenarios of the network device and the terminal device are not limited in the embodiments of this application.

Communication between the network device and the terminal device may be performed by using a licensed spectrum (licensed spectrum), or may be performed by using an unlicensed spectrum (unlicensed spectrum), or may be performed by using both a licensed spectrum and an unlicensed spectrum. Communication between the network device and the terminal device may be performed by using a spectrum below 6 gigahertzes (gigahertzes, GHz), or may be performed by using a spectrum above 6 GHz, or may be performed by using both a spectrum below 6 GHz and a spectrum above 6 GHz. A spectrum resource used between the network device and the terminal device is not limited in the embodiments of this application.

A system architecture and a service scenario described in the embodiments of this application are intended to describe the technical solutions in the embodiments of this application more clearly, and do not constitute a limitation on the technical solutions provided in the embodiments of this application. A person of ordinary skill in the art may know that with the evolution of a network architecture and the emergence of a new service scenario, the technical solutions provided in the embodiments of this application are also applicable to similar technical problems.

The following describes technical terms in the embodiments of this application.

### (1) Semi-persistent scheduling (semi-persistent scheduling, SPS).

The network device sends configuration information to the terminal device by using higher layer signaling. The configuration information may include a scheduling periodicity P and an uplink time-frequency resource used by the terminal device to feed back response (response) information of downlink data. The uplink time-frequency resource may be a physical uplink control channel (physical uplink control channel, PUCCH) resource, and the PUCCH carries the response information of the downlink data. In this application, the downlink data is downlink data carried on a PDSCH. Therefore, the response information of the downlink data may also be referred to as response information of the PDSCH. The response information may be an acknowledgement (acknowledgement, ACK) or a negative acknowledgement (negative acknowledgement, NACK). The ACK is used to indicate that the terminal device correctly receives the downlink data, and the NACK is used to indicate that the downlink data is incorrectly received by the terminal device.

The scheduling periodicity P is used to indicate a quantity of time units spaced between two neighboring SPS physical downlink shared channels (physical downlink shared channels, PDSCHs). The PUCCH resource may be one or more time domain symbols in one slot. A configured PUCCH is used to carry response information corresponding to downlink data transmitted on a PDSCH without scheduling information.

Before sending downlink SPS data, the network device first sends downlink control information (downlink control information, DCI) by using an activated physical downlink control channel (physical downlink control channel, PDCCH). The DCI is used to schedule transmission of the downlink SPS data, and indicate a time-frequency resource for transmitting the downlink SPS data. The time-frequency resource for transmitting the downlink SPS data may also be referred to as an SPS PDSCH, which is referred to as a PDSCH for short. The DCI indicates a slot in which the SPS PDSCH is located, and a start symbol S and a length L of the PDSCH in the slot. The DCI may further indicate a slot in which the response information of the downlink data on the PDSCH is located.

In addition, it should be understood that activating (activating) the DCI carried on the PDCCH may be considered as activating the DCI.

In a possible implementation, the DCI carried on the PDCCH activating SPS PDSCH includes a 2-bit indication field to indicate a value of K0. K0 is used to indicate a quantity of time units spaced between a time unit in which a PDCCH carrying DCI is located and a time unit in which a corresponding PDSCH is located. That is, if DCI carried on an PDCCH activating SPS PDSCH is received in an n^{th} time unit, a corresponding SPS PDSCH carrying downlink data is located in an (n+K0)^{th} time unit. For example, a time unit is a slot, K0 is equal to 1, the start symbol S indicated in the DCI is a symbol 1, and the length is two symbols. In other words, if the DCI carried on the PDCCH activating SPS PDSCH is received in the n^{th} slot, the corresponding SPS PDSCH carrying the downlink data is located in a symbol 1 and a symbol 2 in an (n+1)^{th} slot.

A specific method for indicating a slot carrying response information of downlink data may be: The DCI includes indication information, the indication information indicates a K1 value in a K1 set, and the K1 set may be a set configured by using higher layer signaling. Each K1 value in the K1 set represents a quantity of time units spaced between a time unit carrying downlink data and a time unit carrying response information corresponding to the downlink data. For example, if K0 is 1, and a slot carrying downlink data is the (n+1)^{th} slot, a slot carrying response information corresponding to the downlink data is an (n+1+K1)^{th} slot. For example, if K1 is equal to 4, the slot carrying the response information corresponding to the downlink data is an (n+5)^{th} slot.

The terminal device may determine, based on the SPS scheduling periodicity P configured by higher layer signaling and the start symbol S and the length L that are previously determined, a slot in which a subsequent SPS PDSCH is located. Based on this, the network device does not need to send one piece of DCI each time before sending downlink data. Therefore, downlink signaling overheads can be reduced.

For example, still using the foregoing example, the terminal device receives the DCI in the n^{th} slot, indicating that K0 is equal to 1. The SPS scheduling periodicity P is equal to one slot. In this case, from the (n+1)^{th} slot, the terminal device receives, in a symbol 1 and a symbol 2 in each slot, downlink data sent by the network device. For details, refer to FIG. 2. If P is equal to 2, from the (n+1)^{th} slot, the terminal device receives, in a symbol 1 and a symbol 2 in every other slot, downlink data sent by the network device. That is, the terminal device receives the downlink data in slots such as the (n+1)^{th} slot, an (n+3)^{th} slot, and an (n+5)^{th} slot.

The first SPS PDSCH that carries downlink data and whose time domain location is after the PDCCH activating SPS PDSCH may be referred to as an SPS PDSCH with scheduling information, and another subsequent SPS PDSCH may be referred to as an SPS PDSCH without scheduling information. In the foregoing example in FIG. 2, a PDSCH in the (n+1)^{th} slot may be referred to as an SPS PDSCH with scheduling information, and PDSCHs in an (n+2)^{th} slot and other following slots may be referred to as SPS PDSCHs without scheduling information.

For the SPS PDSCH with scheduling information or the SPS PDSCH without scheduling information, K1 may be used to determine the slot in which the response information is located. It is assumed that P is equal to 1. The first PDSCH carrying downlink data is in the (n+1)^{th} slot, and response information corresponding to the downlink data is in the (n+1+K1)^{th} slot; the second PDSCH carrying downlink data is in the (n+2)^{th} slot, and response information corresponding to the downlink data in an (n+2+K1)^{th} slot.

### (2) Dynamic scheduling may also be referred to as non-SPS data scheduling.

The dynamic scheduling means that each time before sending downlink data to the terminal device by using a PDSCH, the network device needs to first send scheduling information to the terminal device by using DCI on a PDCCH. It may be understood that all dynamically scheduled PDSCHs are PDSCHs with scheduling information. Dynamically scheduled DCI may indicate a slot in which the PDSCH is located, a start symbol S and a length L of the PDSCH in the slot, and a slot in which response information corresponding to the PDSCH is located.

### (3) Time unit

In this application, the time unit may be a symbol, a sub-slot (sub-slot), a mini-slot (mini-slot), a slot, a subframe, or a radio frame, or may be one or more symbols, one or more sub-slots, one or more mini-slots, one or more slots, one or more subframes, or one or more radio frames. For example, a length of the time unit may be one slot, a 1/2 slot, a 1/7 slot, or the like. A specific time length of the time unit is not limited in this application. The time length of the time unit may be specifically specified in a protocol or configured by higher layer signaling. In this application, unless otherwise specified, all symbols refer to time domain symbols, and the time domain symbols may be orthogonal frequency division multiplexing (orthogonal frequency division multiplexing, OFDM) symbols.

### (4) Response codebook

A response information bit sequence formed by concatenating a plurality of pieces of response information in a specific order is referred to as a response codebook, which is referred to as a codebook for short.

(5) Higher layer signaling may be signaling of protocol layers above a physical layer, and may be specifically: signaling of a media access control (media access control, MAC) layer, a radio link control (radio link control, RLC) layer, a packet data convergence protocol (packet data convergence protocol, PDCP) layer, a radio resource control (radio resource control, RRC) layer, or a non-access stratum (non-access stratum, NAS).

### (6) Three different manners of sending response information

A manner of skipping an acknowledgement (skipping an ACK) means: When downlink data received by the terminal device is correctly decoded, the terminal device does not feed back an acknowledgement to the network device; when downlink data received by the terminal device is incorrectly decoded, the terminal device normally feeds back a negative acknowledgement to the network device. A manner of skipping a negative acknowledgement (skipping a NACK) means: When downlink data received by the terminal device is incorrectly decoded, the terminal device does not feed back a negative acknowledgement to the network device; when downlink data received by the terminal device is correctly decoded, the terminal device feeds back an acknowledgement to the network device. A manner of skipping a hybrid automatic repeat request acknowledgement (hybrid automatic repeat request acknowledgement, HARQ-ACK) means that neither an acknowledgement nor a negative acknowledgement is fed back to the network device, regardless of whether downlink data received by the terminal device is correctly decoded.

In the SPS manner, DCI needs to be sent by using only one PDCCH, and then data is periodically transmitted subsequently. This manner requires a few signaling overheads, and is suitable for transmission of a smallpacket service or a low-latency service, for example, transmission of periodic small packets of a downlink URLLC service. However, because the network device needs to transmit URLLC service data to the terminal device as soon as possible, an SPS PDSCH scheduling periodicity configured by the network device may be short. For example, the periodicity is seven symbols or even two symbols. Based on this, there may be a plurality of SPS PDSCHs in one slot. These PDSCHs are indicated by DCI carried on one PDCCH activating SPS PDSCH, and these PDSCHs all correspond to one K1 indication value. Therefore, response information corresponding to downlink data carried on these PDSCHs may also be transmitted in one slot.

The URLLC service is applicable to a plurality of application scenarios, such as factory automation and the smart grid. In different scenarios, service data has different transmission periodicities, and has different reliability and latency requirements. Therefore, a plurality of sets of SPS parameters may be configured for SPS data transmission. For example, different SPS scheduling periodicities may be configured to meet different service requirements. Data transmission corresponding to each of the plurality of sets of SPS parameters may be performed according to the description in (1) described above, and a PUCCH for carrying response information may be determined. The plurality of sets of SPS parameters may be activated in one slot, and response information corresponding to different SPS PDSCHs is sent in the same slot.

According to the foregoing description, it is assumed that one set of SPS parameters is activated, the SPS scheduling periodicity is very short, and response information needs to be frequently sent. For example, if the SPS scheduling periodicity is two symbols, one piece of response information needs to be sent every two symbols. When a plurality of sets of SPS parameters are activated, activated SPS PDSCHs may be located at different locations in one slot. As a result, a plurality of PDSCHs need to be sent in one slot, and correspondingly a plurality of pieces of response information may be sent in one slot. To ensure reliability of URLLC service data, an accuracy rate of data transmitted on the SPS PDSCH may be very high, approaching 99.999%. Consequently, ACKs are frequently sent, uplink transmit power of the terminal device is wasted, and additional interference may be caused.

To save the uplink transmit power of the terminal device and reduce the interference, the manner of skipping an acknowledgement may be used when the response information is sent. To be specific, after receiving downlink data, the terminal device does not send an ACK to the network device if decoding is correct, and sends a NACK to the network device if decoding is incorrect. When a channel condition of the terminal device is very poor or the terminal device is located at a cell edge, the network device may repeatedly send data to the terminal device for a plurality of times. Because the channel condition is very poor, there is a high probability that the data received by the terminal device is incorrectly decoded. In this case, the manner of skipping a negative acknowledgement is used. To be specific, after receiving downlink data, the terminal device does not send a NACK to the network device if decoding is incorrect, and sends an ACK to the network device if decoding is correct. This ensures that the terminal device does not frequently send a negative acknowledgement, and reduces a waste of uplink resources. When the channel condition of the terminal device is good, or for transmission of low-latency service data, the network device may send downlink data in a conservative manner, to ensure that a very high accuracy rate can be achieved through one time of transmission or a plurality of times of repeated transmission. In this case, the manner of skipping an HARQ-ACK may be used. Therefore, the uplink transmit power is reduced, the waste of uplink resources is reduced, and the interference is reduced.

An example in which a manner of sending response information is skipping an acknowledgement is used below to describe a problem existing when response information corresponding to downlink data transmitted in the SPS manner needs to be transmitted with other uplink information. When the manner of sending response information is the manner of skipping a negative acknowledgement or skipping an HARQ-ACK, an existing problem is similar.

If the manner of skipping an acknowledgement is used, the network device cannot determine which piece of downlink data is incorrectly decoded and which piece of downlink data is correctly decoded. This increases complexity of blindly detecting the response information by the network device. Consequently, the network device cannot determine whether downlink data is correctly received by the terminal device, and cannot retransmit, in time, data that is incorrectly received by the terminal device, and reliability and a delay of the downlink data are affected. In addition, if the response information corresponding to the downlink data transmitted in the SPS manner needs to be transmitted with the other uplink information, that is, when a resource for transmitting the response information overlaps a resource for transmitting the other uplink information, how to send the response information to reduce the blind detection complexity of the network device remains to be studied.

The following describes the foregoing problem by using examples with reference to different application scenarios.

Scenario 1: Response information of a plurality of SPS PDSCHs is carried on a same time-frequency resource (for example, a PUCCH resource) for sending. If the manner of skipping an acknowledgement is used, the network device cannot determine which piece of downlink data is incorrectly decoded and which piece of downlink data is correctly decoded.

As shown in FIG. 3, it is assumed that response information of downlink data on three SPS PDSCHs needs to be sent on one PUCCH. Case 1: If downlink data on a first PDSCH is correctly decoded, and neither downlink data on a second PDSCH nor downlink data on a third PDSCH is correctly decoded, because an ACK is not sent, the terminal device sends, to the network device, two NACKs which are referred to as NN for short. Case 2: If downlink data on a first PDSCH and a third PDSCH is incorrectly decoded, and downlink data on a second PDSCH is correctly decoded, because an ACK is not sent, same as in Case 1, the terminal device also sends, to the network device, two NACKs which are referred to as NN for short. In other words, in these two cases, the network device only knows that two of three pieces of downlink data are incorrectly decoded, but does not know which two of the three pieces of downlink data are incorrectly decoded.

It should be noted that, for ease of description, in the embodiments of this application, a NACK is referred to as "N" for short, and an ACK is referred to as "A" for short.

Because the response information of the three pieces of downlink data needs to be carried on a same PUCCH, and each piece of downlink data may be correctly decoded, the terminal device may send 1-bit, 2-bit, or 3-bit response information to the network device, and the network device does not know how many bits are fed back by the terminal device. In addition, when quantities of bits that are fed back are different, PUCCH resources that are determined by the terminal device and that carry response codebooks may be different. As a result, the network device needs to perform blind detection on a plurality of PUCCH resources configured for the terminal device. This increases implementation complexity of the network device, and increases a processing delay.

Scenario 2: Response information of an SPS PDSCH and response information of a dynamically scheduled PDSCH are transmitted by using a same codebook. An ACK is not sent when downlink data on the SPS PDSCH is correctly decoded, and a NACK is sent only when decoding is incorrect. An ACK is sent when downlink data on the dynamically scheduled PDSCH is correctly decoded, and a NACK is sent when decoding is incorrect.

In an example, it is assumed that the terminal device feeds back the response information in a semi-persistent codebook mode. For a specific definition of the semi-persistent codebook, refer to Protocol 38.213 V15.5.0 in 3rd generation partnership project (3rd Generation Partnership Project, 3GPP). The terminal device generates a response codebook based on whether data received on each PDSCH reception occasion (reception occasion) is correctly decoded. The SPS PDSCH or the dynamically scheduled PDSCH may be received on each PDSCH reception occasion. If an ACK is not sent when the downlink data on the SPS PDSCH is correctly decoded, and a NACK is sent only when decoding is incorrect, the terminal device dynamically changes a quantity of bits of the codebook based on whether the downlink data received on the PDSCH reception occasion is correctly decoded.

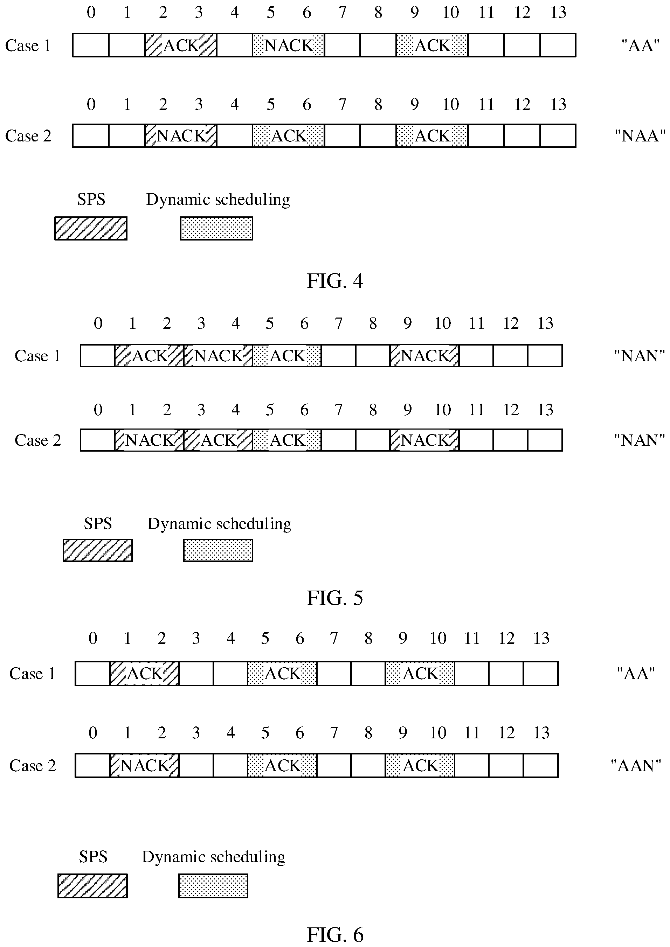

As shown in FIG. 4, it is assumed that response information corresponding to downlink data received on three PDSCH reception occasions is fed back in a same response codebook. An SPS PDSCH is received on a first PDSCH reception occasion, and dynamically scheduled PDSCHs are received on the remaining two PDSCH reception occasions. Case 1: If downlink data on an SPS PDSCH is correctly decoded, and downlink data on two dynamically scheduled PDSCHs is correctly decoded, no response information is fed back in a feedback bit corresponding to the first PDSCH reception occasion, that is, the terminal device feeds back, to the network device, two ACKs which are denoted as AA. Case 2: If downlink data on an SPS PDSCH is incorrectly decoded, a NACK is fed back, and downlink data on two dynamically scheduled PDSCHs is correctly decoded, the terminal device feeds back NAA to the network device.

FIG. 4 shows an example in which response information of downlink data on only one SPS PDSCH and response information of downlink data on a dynamically scheduled PDSCH need to be transmitted in a same response codebook. If response information of downlink data on a plurality of SPS PDSCHs and response information of downlink data on a dynamically scheduled PDSCH need to be transmitted in a same response codebook, a quantity of bits of the codebook may change, and the network device cannot determine which PDSCH carries downlink data that is correctly decoded.

As shown in FIG. 5, it is assumed that response information of downlink data on three SPS PDSCHs and response information of downlink data on one dynamically scheduled PDSCH need to be transmitted in one response codebook. Case 1: If downlink data on a first SPS PDSCH is correctly decoded, downlink data on a second SPS PDSCH is incorrectly decoded, downlink data on a third dynamically scheduled PDSCH is correctly decoded, and downlink data on a fourth SPS PDSCH is incorrectly decoded, the terminal device feeds back "NAN" to the network device. Case 2: If downlink data on a first SPS PDSCH is incorrectly decoded, downlink data on a second SPS PDSCH is correctly decoded, downlink data on a third dynamically scheduled PDSCH is correctly decoded, and downlink data on a fourth SPS PDSCH is incorrectly decoded, the terminal device feeds back "NAN" to the network device. In the foregoing two cases, response codebooks sent by the terminal device are the same. That is, in the two cases, the network device can only determine that two pieces of downlink data are incorrectly decoded, but cannot determine which piece of downlink data on the three SPS PDSCHs is incorrectly decoded.

In another example, in a dynamic codebook mode, response information of downlink data on an SPS PDSCH is added after response information of downlink data on a dynamically scheduled PDSCH. The terminal device dynamically changes a quantity of bits of a response codebook based on whether the downlink data on the SPS PDSCH is correctly decoded. In addition, when response information of downlink data on a plurality of SPS PDSCHs is transmitted by using a same response codebook, the network device cannot determine which SPS PDSCH carries downlink data that is correctly decoded.

As shown in FIG. 6, downlink data on two dynamically scheduled PDSCHs and downlink data on one SPS PDSCH use a same codebook to feed back response information. Case 1: If the downlink data on the two dynamically scheduled PDSCHs is correctly decoded, and the downlink data on the SPS PDSCH is correctly decoded, the terminal device sends "AA" to the network device. Case 2: If the downlink data on the two dynamically scheduled PDSCHs is correctly decoded, and the downlink data on the SPS PDSCH is incorrectly decoded, the terminal device sends "AAN" to the network device.

The preceding analysis shows that, in the semi-persistent codebook mode or the dynamic codebook mode, the quantity of bits of the response codebook is related to whether the downlink data on the SPS PDSCH is correctly decoded. When quantities of bits of response codebooks are different, PUCCH resources that are determined by the terminal device and that carry the response codebooks may also be different. As a result, the network device needs to perform blind detection on a plurality of PUCCH resources configured for the terminal device. This increases detection complexity of the network device, and increases a processing delay.

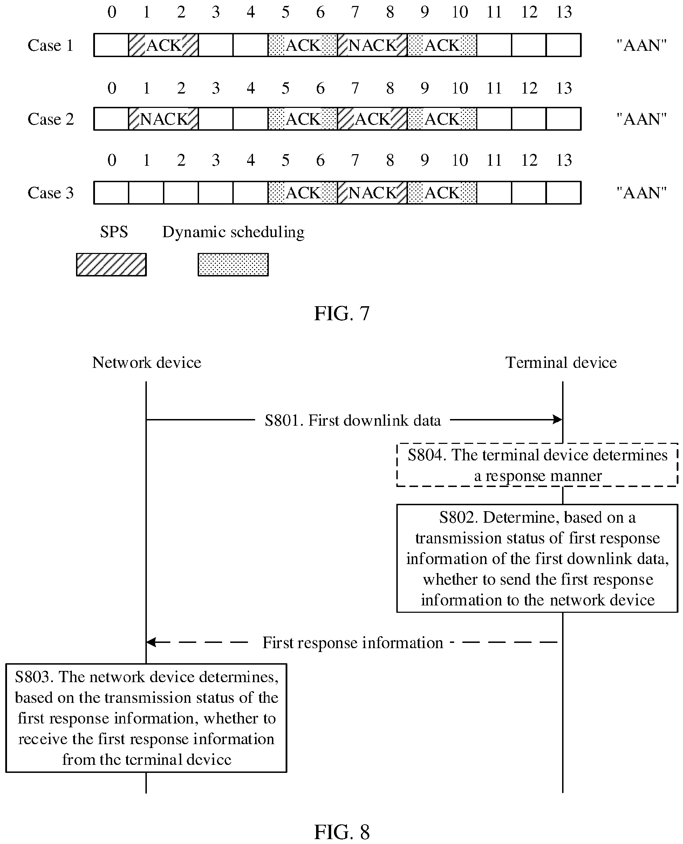

FIG. 6 shows a case in which response information of downlink data on only one SPS PDSCH and response information of downlink data on a dynamically scheduled PDSCH need to be transmitted in a same response codebook. If response information of downlink data on a plurality of SPS PDSCHs and response information of downlink data on a dynamically scheduled PDSCH need to be transmitted in a same response codebook, not only the detection complexity of the network device increases because the quantity of bits of the response codebook changes, as described above, but also the network device cannot determine which SPS PDSCH carries downlink data that is correctly decoded, as described in scenario 1. For example, in the three cases shown in FIG. 7, the terminal device sends "AAN" to the network device, and the network device cannot determine which SPS PDSCH carries downlink data that is correctly decoded.

Scenario 3: Response information of downlink data on an SPS PDSCH is transmitted on a physical uplink shared channel (physical uplink shared channel, PUSCH) in the manner of skipping an acknowledgement.

In this scenario, a quantity of bits of information carried on the PUSCH is related to whether the downlink data on the SPS PDSCH is correctly decoded. A size of a PUSCH resource is fixed, and when quantities of bits of response information of downlink data are different, resources that are determined by the terminal device and that are in the PUSCH resource and that are used to send the response information of the downlink data may be different. When the size of the PUSCH resource is determined, a resource that is used for uplink data transmission and that is in the PUSCH resource also changes. As a result, the network device needs to perform blind detection in the PUSCH resource, including blind detection on the response information and blind detection on uplink data information. In this case, the detection complexity of the network device increases, the processing delay increases, and reliability of the uplink data information is also affected. In addition, when the downlink data on the SPS PDSCH is incorrectly decoded, the response information needs to be sent on the PUSCH. When the downlink data on the SPS PDSCH is correctly decoded, the response information does not need to be sent on the PUSCH resource. In this case, the network device needs to blindly detect whether there is response information on the PUSCH resource. This increases the implementation complexity of the network device.

When response information of downlink data on a plurality of SPS PDSCHs is transmitted on the PUSCH, the network device also cannot determine which SPS PDSCH carries downlink data that is correctly decoded. For details, refer to the related descriptions of scenario 1.

Scenario 4: A first PUCCH resource carries first response information, a second PUCCH resource carries second response information, the first response information is response information of downlink data on a first SPS PDSCH, and the second response information is response information of downlink data on a second SPS PDSCH. When the first PUCCH resource overlaps the second PUCCH resource in time domain, the terminal device cannot separately send the first response information and the second response information by using the first PUCCH resource and the second PUCCH resource that overlap in time domain. A possible processing manner is as follows:

Manner 1: Response information on one PUCCH is dropped. Generally, response information with a low priority is dropped. It is assumed that there are two PUCCHs: a PUCCH 1 and a PUCCH 2, a priority of response information on the PUCCH 1 is high, and a priority of response information on the PUCCH 2 is low. In this case, according to the manner shown in Table 1, if the PUCCH 1 carries N, regardless of whether the PUCCH 2 carries N or A, because the priority of the response information on the PUCCH 1 is high, N is sent only on the PUCCH 1. In this case, the network device knows that the response information on the PUCCH 2 is to be dropped. However, if the PUCCH 1 carries A, regardless of whether the PUCCH 2 carries N or A, because the priority of the response information on the PUCCH 1 is high, the response information is sent neither on the PUCCH 1 nor the PUCCH 2. In this case, although the response information of the two pieces of downlink data is not sent, the network device still needs to perform blind detection on the PUCCH 1, causing a waste of resources.

**Table 1**

| Reuse | PUCCH 1 | PUCCH 2 |
|---|---|---|
| (N, N) | N | - |
| (N, A) | N | - |
| (A, N) | - | - |
| (A, A) | - | - |

Manner 2: The two pieces of response information are combined and fed back together. This is equivalent to scenario 1 in which response information of a plurality of SPS PDSCHs is fed back together. In this case, the problem described in scenario 1 exists, that is, the network device cannot determine which SPS PDSCH carries downlink data that is incorrectly decoded and which SPS PDSCH carries downlink data that is correctly decoded.

In addition, after the two pieces of response information are combined, the two pieces of response information may need to be fed back on a PUCCH 3 other than the two PUCCHs, as shown in Table 2. If response information to be transmitted on the PUCCH 1 and response information to be transmitted on the PUCCH 2 are both NACKs, the terminal device sends "NN" to the network device on the PUCCH 3. If the PUCCH 1 carries a NACK, and the PUCCH 2 carries an ACK, N is sent on the PUCCH 1. If the PUCCH 1 carries an ACK and the PUCCH 2 carries a NACK, N is sent only on the PUCCH 2. If both channels carry ACKs, no feedback is sent on the three PUCCHs.

**Table 2**

| Reuse | PUCCH 1 | PUCCH 2 | PUCCH 3 |
|---|---|---|---|
| (N, N) | - | - | NN |
| (N, A) | N | - | - |
| (A, N) | - | N | - |
| (A, A) | - | - | - |

It can be learned from the foregoing that a PUCCH resource used to carry response information of downlink data is related to whether the downlink data is correctly decoded. In this case, the network device cannot determine a PUCCH resource on which the response information is detected, and thus needs to perform blind detection on the configured PUCCH resources. This increases detection complexity of the network device.

It may be understood that the PDCCH, the PDSCH, the PUCCH, and the PUSCH are respectively examples of a downlink control channel, a downlink data channel, an uplink control channel, and an uplink data channel. In different communication systems or in different application scenarios, these channels may have different names. Specific names of these channels are not limited in the embodiments of this application.

Based on this, an embodiment of this application provides a communication method. Referring to FIG. 8, the method procedure may include steps S801, S802, S803, and S804. A network device in this procedure may be specifically the network device shown in FIG. 1, and a terminal device may be specifically one of the terminal devices shown in FIG. 1. It may be understood that in this application, a function of the network device may alternatively be implemented by using a chip applied to the network device, and a function of the terminal device may alternatively be implemented by using a chip applied to the terminal device. The method procedure includes the following steps.

S801. The network device sends first downlink data to the terminal device.

The first downlink data is transmitted in an SPS manner. The first downlink data transmitted in the SPS manner may include SPS downlink data scheduled by initial DCI and downlink data subsequently transmitted based on a configured SPS periodicity P, namely, downlink data on an SPS PDSCH with scheduling information and downlink data on an SPS PDSCH without scheduling information, or may not include the downlink data scheduled by the initial DCI and includes only the downlink data subsequently transmitted based on the configured SPS periodicity P other than the SPS downlink data scheduled by the DCI, namely, the downlink data on the SPS PDSCH without the scheduling information. The first downlink data may be specifically one piece of downlink data, or may be a plurality of pieces of downlink data.

S802. After receiving the first downlink data from the network device, the terminal device determines, based on a transmission status of first response information of the first downlink data, whether to send the first response information to the network device.

S803. The network device determines, based on the transmission status of the first response information, whether to receive the first response information from the terminal device. For example, the transmission status of the first response information includes two types: a first state and a second state. The first state represents that the first response information and first uplink information are to be simultaneously transmitted in a first time unit, and the second state represents that the first response information is to be separately transmitted in the first time unit. The first uplink information is information to be transmitted by the terminal device in the first time unit. The first uplink information may be response information of second downlink data, or may be to-be-sent uplink data information of the terminal device. In this embodiment of this application, the first time unit may be a time unit such as a mini-slot, a slot, a subframe, or a radio frame, and the mini-slot may be one or more time domain symbols.

The following describes examples of a condition satisfied by the first state and a condition satisfied by the second state.

Example 1: The first state is a state that satisfies condition 1 or condition 2.

Condition 1: A first time-frequency resource used to transmit the first response information overlaps a second time-frequency resource used to transmit the first uplink information in time domain, where the first uplink information is second response information or the to-be-sent uplink data information, and the second response information is the response information of the second downlink data. In this embodiment of this application, overlapping includes two cases: partial overlapping and full overlapping.

It should be noted that if the first time-frequency resource used to transmit the first response information and the second time-frequency resource used to transmit the first uplink information fully overlap in time domain, the first time-frequency resource and the second time-frequency resource may be a same time-frequency resource, or the first time-frequency resource and the second time-frequency resource are the same in time domain, but different in frequency domain.

The second downlink data in this application may be downlink data transmitted in a dynamic scheduling manner, or downlink data transmitted in the SPS manner.

It should be noted that, in the foregoing scenarios 1, 3, and 4, states of the response information of the downlink data on the SPS PDSCH are states that satisfy condition 1.

Condition 2: The first response information and the first uplink information are transmitted by using a same codebook, where the first uplink information is the second response information.

In scenario 2, the transmission status of the response information of the downlink data on the SPS PDSCH is a state that satisfies condition 2.

Example 2: The second state is a state that satisfies condition 3 or condition 4.

Condition 3: A first time-frequency resource used to transmit the first response information does not overlap a second time-frequency resource used to transmit the first uplink information in time domain, where the first uplink information is the second response information or the to-be-sent uplink data information.

Condition 4: Only the first response information is to be transmitted in the first time unit.

In a possible implementation, before S802 of determining, by the terminal device based on a transmission status of first response information, whether to send the first response information, the method may further include S804. Specifically, S804 may be performed after the terminal device receives the first downlink data, or may be performed before the terminal device receives the first downlink data. This is not limited in this application. In FIG. 8, for example, the step S804 is performed after the terminal device receives the first downlink data.

S804. The terminal device determines a response manner.

In an example, the terminal device determines the response manner based on a protocol specification. The response manner is one of the following: a manner of skipping an ACK, a manner of skipping a NACK, or a manner of skipping an HARQ-ACK.

In another example, the terminal device determines the response manner based on received indication information. The indication information indicates that a first response manner in a response manner set is the response manner, and the response manner set includes at least two of the following: a manner of skipping an ACK, a manner of skipping a NACK, or a manner of skipping an HARQ-ACK. The indication information may be sent by the network device to the terminal device. For example, the network device sends the indication information to the terminal device by using higher layer signaling. The higher layer signaling may be RRC signaling sent to a specific terminal device, or may be RRC signaling, for example, a broadcast message, sent to a group of terminal devices or sent to all users in a cell.

The following specifically describes how the terminal device determines, based on the transmission status of the first response information, whether to send the first response information. In addition, a manner in which the network device determines, based on the transmission status of the first response information, whether to receive the first response information from the terminal device is similar to a manner in which the terminal device determines, based on the transmission status of the first response information, whether to send the first response information. Details are not described again.

To resolve a problem existing in the manner of skipping an acknowledgement, refer to example 1 to example 4 in this embodiment provided in this application.

In example 1 to example 4, the first response information is an acknowledgement.

Example 1: When the transmission status of the first response information is the second state, the terminal device does not send the first response information to the network device. Correspondingly, when the network device does not receive the first response information, the network device determines that the first downlink data is correctly decoded.

In a possible scenario, the second state satisfies condition 3, and although other response information and the uplink data information are to be transmitted in the first time unit, the other response information and the uplink data information are to be transmitted by using completely different time-frequency resources.

In another possible scenario, the second state satisfies condition 4, and neither other response information nor the uplink data information is to be transmitted in the first time unit, or there is no other response information or no uplink data information to be transmitted in the first time unit.

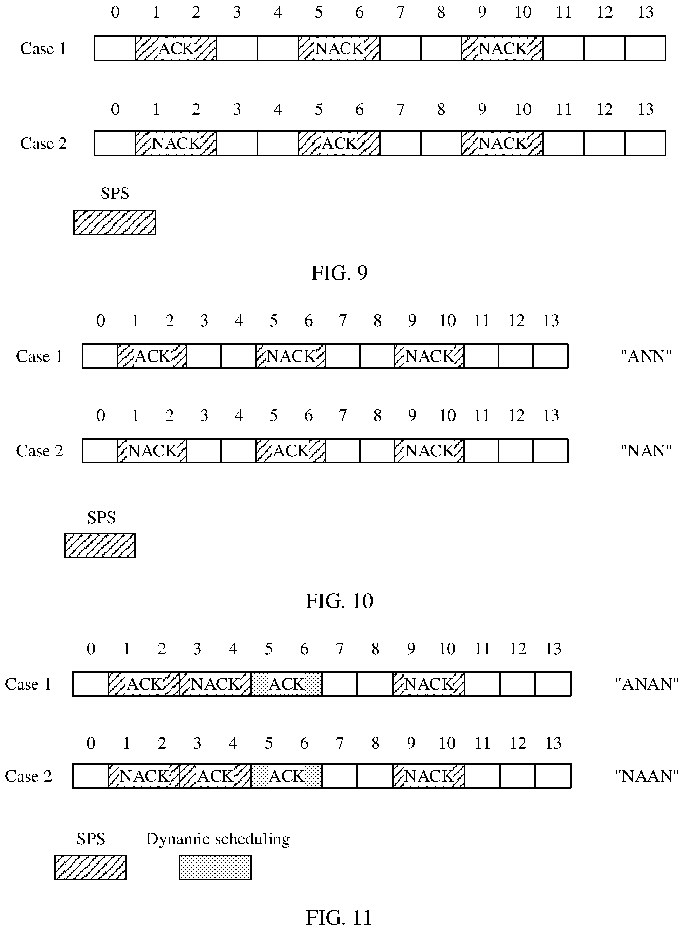

As shown in FIG. 9, it is assumed that the terminal device receives downlink data on three SPS PDSCHs. The downlink data is downlink data 1, downlink data 2, and downlink data 3. Response information of the three pieces of downlink data is located in different time units. For example, the response information of the downlink data 1 is located in a time unit 1, the response information of the downlink data 2 is located in a time unit 2, and the response information of the downlink data 3 is located in a time unit 3. When downlink data is correctly decoded, the terminal device sends no information in a time unit in which response information of the downlink data is located. Alternatively, when downlink data is incorrectly decoded, the terminal device sends a NACK in a time unit in which response information of the downlink data is located. As shown in FIG. 9, in Case 1, if the downlink data 1 is correctly decoded, the downlink data 2 is incorrectly decoded, and the downlink data 3 is incorrectly decoded, the terminal device sends a NACK in each of the time unit 2 and the time unit 3. In Case 2, if the downlink data 1 is incorrectly decoded, the downlink data 2 is correctly decoded, and the downlink data 3 is incorrectly decoded, the terminal device sends a NACK in each of the time unit 1 and the time unit 3.

In the foregoing manner, when the downlink data received on the SPS PDSCH is correctly decoded, the terminal device does not send an acknowledgement. This can reduce uplink transmit power, and reduce interference. In addition, the network device accurately determines, based on the transmission status of the response information, whether sent downlink data is successfully decoded on the terminal device, and the network device can determine, in advance based on the transmission status of the response information, a quantity of bits fed back by the terminal device, so that an uplink time-frequency resource on which blind detection is performed can be determined, detection complexity of the network device can be reduced, and a blind detection delay can be reduced.

Example 2: When the transmission status of the first response information is the first state, the terminal device sends the first response information to the network device. In this case, the network device also receives the first response information from the terminal device.

When the first uplink information is different information, the solution in example 2 is described in detail below.

Embodiment 1: The first uplink information is the second response information, and the second downlink data corresponding to the second response information is data transmitted in the SPS manner. The first state satisfies condition 1 or condition 2. When the response information of the two pieces of downlink data transmitted in the SPS manner needs to be fed back together, the manner of skipping an acknowledgement is not used, and the response information is sent regardless of whether the downlink data is correctly decoded. In other words, the first response information needs to be normally sent.

As shown in FIG. 10, response information of three pieces of downlink data transmitted in the SPS manner is used as an example. For example, the response information of the three pieces of downlink data transmitted in the SPS manner needs to be sent in a same slot. In Case 1, the terminal device feeds back "ANN" to the network device. In Case 2, the terminal device feeds back "NAN" to the network device. Therefore, the network device can determine a quantity of bits of a response codebook, can further determine a PUCCH resource for receiving the response information, receive the response information on the determined PUCCH resource, and can accurately determine, based on the response information fed back by the terminal device, whether each piece of sent downlink data is successfully decoded on the terminal device side. The problem existing in scenario 1 is resolved.

Embodiment 2: The first uplink information is the second response information, the second response information is the response information of the second downlink data, and the second downlink data is dynamically scheduled. The first state satisfies condition 1 or condition 2. In this case, the manner of skipping an acknowledgement is not used, and the terminal device sends the first response information and the second response information to the network device regardless of whether the first response information is an acknowledgement or a negative acknowledgement. Correspondingly, the network device receives the first response information and the second response information from the terminal device.

Embodiment 2 is also applicable to a scenario in which response information of a plurality of pieces of first downlink data transmitted in the SPS manner needs to be fed back with response information of dynamically scheduled second downlink data. For example, it is assumed that response information of downlink data on three SPS PDSCHs and response information of dynamically scheduled downlink data are fed back in a same response codebook. Referring to FIG. 11, the dynamic scheduled downlink data is correctly decoded. In Case 1, downlink data on a first SPS PDSCH is correctly decoded, downlink data on a second SPS PDSCH is incorrectly decoded, and downlink data on a third SPS PDSCH is incorrectly decoded. If a semi-persistent codebook mode is used as an example, response information included in a response codebook sent by the terminal device to the network device is "ANAN". In Case 2, downlink data on a first SPS PDSCH is incorrectly decoded, downlink data on a second SPS PDSCH is correctly decoded, and downlink data on a third SPS PDSCH is incorrectly decoded. If a semi-persistent codebook mode is used as an example, response information included in a response codebook sent by the terminal device to the network device is "NAAN".

According to Embodiment 2, the problem described in scenario 2 can be resolved, and the terminal device does not change a quantity of bits of a feedback codebook based on whether the downlink data on the SPS PDSCHs is correctly decoded, but feeds back the same quantity of bits of the feedback codebook regardless of whether the downlink data on the SPS PDSCHs is correctly decoded. In this case, the terminal device can determine, based on a quantity of bits of a response codebook, a PUCCH resource for carrying the response codebook, and the network device can further determine, based on the quantity of bits of the response codebook, the PUCCH resource for carrying the response codebook, and perform blind detection on the determined PUCCH resource. This reduces the detection complexity of the network device, and further reduces a processing delay. In addition, the network device can accurately determine, based on the response codebook, whether the downlink data sent in the SPS manner is correctly decoded on the terminal device side.

Embodiment 3: The first uplink information is the uplink data information. The transmission status of the first response information is the first state, and the first state satisfies condition 1. In other words, the response information of the first downlink data transmitted in the SPS manner is transmitted on the PUSCH for carrying the uplink data information. In this case, the terminal device does not use the manner of skipping an acknowledgement, and the terminal device feeds back the first response information on the PUSCH even if the first response information is an acknowledgement. Correspondingly, the network device receives the first response information and the uplink data information on the PUSCH.

Embodiment 3 is applicable to a scenario in which the response information of the downlink data transmitted in the SPS manner needs to be fed back with the uplink data information. In this scenario, regardless of whether the downlink data transmitted in the SPS manner is correctly decoded, the terminal device feeds back the response information based on an actual decoding result. In Embodiment 3, an amount of downlink data transmitted in the SPS manner is not limited. In other words, Embodiment 3 is also applicable to a scenario in which the response information of the first downlink data on a plurality of SPS PDSCHs needs to be fed back with the uplink data information. Embodiment 3 can resolve the problem described in scenario 3.

According to the manner described in Embodiment 3, the terminal device does not change a quantity of bits of response information based on whether downlink data on an SPS PDSCH is correctly decoded, but the terminal device determines that the quantity of bits of the response information fed back on the PUSCH is the same regardless of whether the downlink data on the SPS PDSCH is correctly decoded. In this case, the network device accurately determines a PUSCH resource for carrying the first response information and the uplink data information, and detects the first response information on the determined PUSCH resource. This reduces the detection complexity of the network device, and further reduces a processing delay. In addition, the network device can accurately determine, based on the first response information, whether the downlink data sent in the SPS manner is correctly decoded on the terminal device side. This can ensure reliability of downlink data transmission, ensure, as much as possible, that uplink data is not affected, and ensure reliability of the uplink data.

Embodiment 4: The first uplink information is the second response information, the second response information is the response information of the second downlink data, and the second downlink data is data transmitted in the SPS manner. When the transmission status of the first response information is the first state that satisfies condition 1, the terminal device may drop one piece of response information, for example, drop response information with a low priority. In addition, for response information with a high priority, the terminal device does not use the manner of skipping an acknowledgement, but feeds back, to the network device, the response information of the downlink data transmitted in the SPS manner even if the response information is an acknowledgement. In Embodiment 4, when determining that the transmission status of the first response information is the first state that satisfies condition 1, the terminal device may further determine, based on a priority of the first response information, whether the terminal device sends the first response information to the network device.

Specifically, when the priority of the first response information is higher than a priority of the second response information, the terminal device sends the first response information to the network device on the first time-frequency resource, and does not send the second response information to the network device. The network device receives the first response information from the terminal device on the first time-frequency resource, and does not receive the second response information from the terminal device on the second time-frequency resource.

For example, the PUCCH 1 is used to carry the first response information, the PUCCH 2 is used to carry the second response information, the PUCCH 1 overlaps the PUCCH 2 in time domain, and the priority of the first response information is higher than the priority of the second response information. If the first response information is a NACK, the first response information is sent only on the PUCCH 1 regardless of whether the second response information is an ACK or a NACK, as shown in Table 3. The network device can determine that the response information carried on the PUCCH 2 is dropped by the terminal device, so that the network device does not detect the response information on the PUCCH 2. If the first response information is an ACK, the first response information is sent only on the PUCCH 1 regardless of whether the second response information is an ACK or a NACK. Referring to Table 3, the network device can determine that the response information carried on the PUCCH 2 is dropped by the terminal device, so that the network device does not detect the response information on the PUCCH 2.

**Table 3**

| Reuse | PUCCH 1 | PUCCH 2 |
|---|---|---|
| (N, N) | N | - |
| (N, A) | N | - |
| (A, N) | A | - |
| (A, A) | A | - |

Embodiment 4 can resolve the problem described in scenario 4.

Embodiment 5: The first uplink information is the second response information, the second response information is the response information of the second downlink data, and the second downlink data is data transmitted in the SPS manner.

When the transmission status of the first response information is the first state that satisfies condition 1, the two pieces of response information may be combined and fed back on a third time-frequency resource. In addition, the terminal device does not use the manner of skipping an acknowledgement, but feeds back the two pieces of response information to the network device even if the two pieces of response information are acknowledgements.

Specifically, the determining, based on a transmission status of first response information of the first downlink data, whether to send the first response information to the network device may be implemented in the following manners:
when the first time-frequency resource used to transmit the first response information overlaps the second time-frequency resource used to transmit the second response information in time domain, sending, by the terminal device, the first response information and the second response information to the network device on the third time-frequency resource, where at least one of the first response information and the second response information is an acknowledgement. Correspondingly, the network device may receive the first response information and the second response information from the terminal device on the third time-frequency resource.

For example, the PUCCH 1 is used to carry the first response information, the PUCCH 2 is used to carry the second response information, and the PUCCH 1 and the PUCCH 2 overlap in time domain. If the first response information is a NACK, and the second response information is a NACK, "NN" is fed back on the PUCCH 3, as shown in Table 4. If the first response information is a NACK and the second response information is an ACK, "NA" is fed back on the PUCCH 3. If the first response information is an ACK, "AN" is fed back on the PUCCH 3, regardless of whether the second response information is a NACK. If the first response information is an ACK and the second response information is an ACK, "AA" is fed back on the PUCCH 3.

**Table 4**

| Reuse | PUCCH 1 | PUCCH 2 | PUCCH 3 |
|---|---|---|---|
| (N, N) | - | - | NN |
| (N, A) | - | - | NA |
| (A, N) | - | - | AN |
| (A, A) | - | - | AA |

Embodiment 5 can resolve the problem described in scenario 4. The terminal device does not need to determine the PUCCH resource based on whether the downlink data on the SPS PDSCH is correctly decoded. The determined PUCCH resource is the same regardless of whether the downlink data is correctly decoded. Correspondingly, the network device can determine the PUCCH resource, and does not need to perform blind detection when receiving the response information on the determined PUCCH resource, so that the detection complexity of the network device is lowered, and the processing delay is reduced. In addition, the network device can accurately determine, based on the response codebook, whether the downlink data sent in the SPS manner is correctly decoded on the terminal device side, thereby ensuring data transmission reliability.

Example 3: The first uplink information is the second response information of the second downlink data, the second response information is the response information of the second downlink data from the network device, and the second downlink data is data transmitted in the SPS manner.

In this case, the manner of skipping an acknowledgement may be used for both the first response information and the second response information. When a piece of downlink data is correctly decoded, an acknowledgement corresponding to the downlink data is not sent. The terminal device determines that response information corresponding to different downlink data is transmitted by using different resources, so that the network device detects the response information of the different downlink data on the different resources. Different resources include: different resources in time domain, different resources in frequency domain, different resources in time and frequency domain, or resources using different scrambling sequences. The following describes the embodiments by using an example in which resources for carrying the first response information and the second response information are different in time domain and frequency domain.

When both the first response information and the second response information are acknowledgements, the terminal device does not send the first response information and the second response information to the network device.

When the first response information is an acknowledgement and the second response information is a negative acknowledgement, the terminal device does not send the first response information to the network device, and sends the second response information to the network device on a fourth time-frequency resource.

Correspondingly, the network device performs blind detection on the third time-frequency resource and the fourth time-frequency resource. When detecting the first response information on the third time-frequency resource, the network device determines that the first downlink data is incorrectly decoded. When not detecting the response information on the third time-frequency resource, the network device determines that the first downlink data is correctly decoded. When detecting the second response information on the fourth time-frequency resource, the network device determines that the second downlink data is incorrectly decoded. When not detecting the response information on the fourth time-frequency resource, the network device determines that the second downlink data is correctly decoded.

According to the method shown in example 3, when the response information of the plurality of SPS PDSCHs is fed back together, an acknowledgement is not sent. This can reduce uplink transmit power, and reduce interference. In addition, different time-frequency resources are used to send the response information, so that the network device can identify an SPS PDSCH that is correctly transmitted, and ensure data transmission reliability and reduce a delay.

Example 4: The first uplink information is the second response information, the second response information is the response information of the second downlink data, and the second downlink data is data transmitted in the SPS manner. When the first time-frequency resource used to transmit the first response information overlaps the second time-frequency resource used to transmit the second response information in time domain, the terminal device may determine, based on priorities of the first response information and the second response information, whether to send the first response information and the second response information to the network device. In this case, the network device may determine, based on the priorities of the first response information and the second response information, whether to receive the first response information and the second response information.

When the priority of the first response information is higher than the priority of the second response information, the terminal device does not send the first response information to the network device, and sends the second response information to the network device on the second time-frequency resource. The second response information may be a negative acknowledgement. Correspondingly, when the network device does not receive the first response information on the first time-frequency resource, the network device determines that the first response information is an acknowledgement, and detects the second response information on the second time-frequency resource.

For example, the PUCCH 1 is used to carry the first response information, the PUCCH 2 is used to carry the second response information, the PUCCH 1 overlaps the PUCCH 2 in time domain, and the priority of the first response information is higher than the priority of the second response information. If the first response information is a NACK, the first response information is sent only on the PUCCH 1 regardless of whether the second response information is an ACK or a NACK, as shown in Table 5. When the network device detects, on the PUCCH 1, that the first response information is a negative acknowledgement, the network device can determine that the response information carried on the PUCCH 2 is to be dropped by the terminal device, so that the network device does not detect the second response information on the PUCCH 2. If the first response information is an ACK and the second response information is a NACK, the terminal device sends the second response information only on the PUCCH 2. If the first response information is an ACK and the second response information is an ACK, the terminal device may send the second response information on the PUCCH 2, or may not send the second response information on the PUCCH 2.

**Table 5**

| Reuse | PUCCH 1 | PUCCH 2 |
|---|---|---|
| (N, N) | N | - |
| (N, A) | N | - |
| (A, N) | - | N |
| (A, A) | - | A/- |

Example 4 can resolve the problem described in scenario 4. When the first response information is an acknowledgement, the second time-frequency resource is used to transmit the second response information. This can improve resource utilization and improve data transmission reliability.

To resolve a problem existing in the manner of skipping a negative acknowledgement, refer to example 5 to example 8 in this embodiment provided in this application.

In example 5 to example 8, the first response information is a negative acknowledgement.

Example 5: When the transmission status of the first response information is the second state, the terminal device does not send the first response information to the network device. Correspondingly, when the network device does not receive the first response information, the network device determines that the first downlink data is incorrectly decoded.

In the foregoing manner, when the downlink data received on the SPS PDSCH is incorrectly decoded, the terminal device does not send a negative acknowledgement. This can reduce uplink transmit power, and reduce interference.

Example 6: When the transmission status of the first response information is the first state, the terminal device sends the first response information to the network device. In this case, the network device also receives the first response information from the terminal device.

When the first uplink information is different information, the solution in example 6 is described in detail below.

Embodiment 6: The first uplink information is the second response information, and the second downlink data corresponding to the second response information is data transmitted in the SPS manner.

In the case shown in Embodiment 6, that is, when response information of at least two pieces of downlink data transmitted in the SPS manner needs to be fed back together, the manner of skipping a negative acknowledgement is not used, and the response information is sent regardless of whether the downlink data is correctly decoded.

Specifically, the first response information may be sent in the following manner:

When the transmission status of the first response information is the first state, the terminal device does not use the manner of skipping a negative acknowledgement, that is, the terminal device sends the first response information to the network device, so that the network device receives the first response information from the terminal device.

Embodiment 7: The first uplink information is the second response information, the second response information is the response information of the second downlink data, and the second downlink data is dynamically scheduled. The terminal device does not use the manner of skipping a negative acknowledgement, and the terminal device sends the first response information to the network device even if the first response information is a negative acknowledgement. The terminal device sends the second response information to the network device regardless of whether the second response information is an acknowledgement or a negative acknowledgement. Correspondingly, the network device receives the first response information and the second response information from the terminal device.

It may be understood that, similar to Embodiment 2, Embodiment 7 is also applicable to a scenario in which response information of a plurality of pieces of first downlink data transmitted in the SPS manner needs to be fed back with response information of dynamically scheduled second downlink data.

For specific implementation, applicable scenarios, technical problems that can be resolved, and beneficial effects that can be achieved by Embodiment 7, refer to Embodiment 2. Details are not described herein again.

Embodiment 8: The first uplink information is the uplink data information. The transmission status of the first response information is the first state, and the first state satisfies condition 1. In other words, the response information of the first downlink data transmitted in the SPS manner is transmitted on the PUSCH for carrying the uplink data information. In this case, the terminal device does not use the manner of skipping a negative acknowledgement, and the terminal device feeds back the first response information on the PUSCH even if the first response information is a negative acknowledgement. Correspondingly, the network device receives the first response information and the uplink data information on the PUSCH.

For specific implementation, applicable scenarios, technical problems that can be resolved, and beneficial effects that can be achieved by Embodiment 8, refer to Embodiment 3. Details are not described herein again.

Embodiment 9: The first uplink information is the second response information, the second response information is the response information of the second downlink data, and the second downlink data is data transmitted in the SPS manner. When the transmission status of the first response information is the first state that satisfies condition 1, the terminal device may drop one piece of response information, for example, drop response information with a low priority. In addition, for response information with a high priority, the terminal device does not use the manner of skipping a negative acknowledgement, but the terminal device feeds back, to the network device, the response information of the data transmitted in the SPS manner even if the response information is a negative acknowledgement. In Embodiment 9, when determining that the transmission status of the first response information is the first state, the terminal device may further determine, based on a priority of the first response information, whether the terminal device sends the first response information to the network device.

Specifically, when the priority of the first response information is higher than a priority of the second response information, the terminal device sends the first response information to the network device on the first time-frequency resource, and does not send the second response information to the network device. The network device receives the first response information from the terminal device on the first time-frequency resource, and does not receive the second response information from the terminal device on the second time-frequency resource. For specific implementation, applicable scenarios, technical problems that can be resolved, and beneficial effects that can be achieved by Embodiment 9, refer to Embodiment 4. Details are not described herein again.

Embodiment 10: The first uplink information is the second response information, the second response information is the response information of the second downlink data, and the second downlink data is data transmitted in the SPS manner. When the transmission status of the first response information is the first state that satisfies condition 1, the two pieces of response information may be combined and fed back on a third time-frequency resource. In addition, the terminal device does not use the manner of skipping a negative acknowledgement, but feeds back the negative acknowledgement to the network device even if the response information is a negative acknowledgement.

Specifically, the determining, based on a transmission status of first response information of the first downlink data, whether to send the first response information to the network device may be implemented in the following manners:
when the first time-frequency resource used to transmit the first response information overlaps the second time-frequency resource used to transmit the second response information in time domain, sending, by the terminal device, the first response information and the second response information to the network device on the third time-frequency resource, where at least one of the first response information and the second response information is a negative acknowledgement. Correspondingly, the network device may receive the first response information and the second response information from the terminal device on the third time-frequency resource.

For specific implementation, applicable scenarios, technical problems that can be resolved, and beneficial effects that can be achieved by Embodiment 10, refer to Embodiment 5. Details are not described herein again.

Example 7: The first uplink information is the second response information of the second downlink data, the second response information is the response information of the second downlink data from the network device, and the second downlink data is data transmitted in the SPS manner.

In this case, the manner of skipping a negative acknowledgement may be used for both the first response information and the second response information. When a piece of downlink data is incorrectly decoded, a negative acknowledgement corresponding to the downlink data is not sent. The terminal device determines that response information corresponding to different downlink data is transmitted by using different resources, so that the network device detects the response information of the different downlink data on the different resources. Different resources include: different resources in time domain, different resources in frequency domain, different resources in time and frequency domain, or resources using different scrambling sequences. The following describes the embodiments by using an example in which resources for carrying the first response information and the second response information are different in time domain and frequency domain.

When the first response information is a negative acknowledgement and the second response information is an acknowledgement, the first response information is not sent to the network device, and the second response information is sent to the network device by using the second time-frequency resource. Correspondingly, the network device detects the response information on the first time-frequency resource and the second time-frequency resource. When not detecting the first response information on the first time-frequency resource, the network device determines that the first response information is a negative acknowledgement. When detecting the second response information on the second time-frequency resource, the network device determines that the second response information is an acknowledgement.

When the first response information is a negative acknowledgement and the second response information is a negative acknowledgement, the first response information is not sent to the network device, and the second response information is not sent to the network device. Correspondingly, the network device detects the response information on the first time-frequency resource and the second time-frequency resource. When not detecting the first response information on the first time-frequency resource, the network device determines that the first response information is a negative acknowledgement. When not detecting the second response information on the second time-frequency resource, the network device determines that the second response information is a negative acknowledgement.

For specific implementation, applicable scenarios, technical problems that can be resolved, and beneficial effects that can be achieved by example 7, refer to example 3. Details are not described herein again.

Example 8: The first uplink information is the second response information, the second response information is the response information of the second downlink data, and the second downlink data is data transmitted in the SPS manner. When the first time-frequency resource used to transmit the first response information overlaps the second time-frequency resource used to transmit the second response information in time domain, it may be determined, based on priorities of the first response information and the second response information, whether to send the first response information and the second response information to the network device. In this case, the network device may determine, based on the priorities of the first response information and the second response information, whether to receive the first response information and the second response information.

When the priority of the first response information is higher than the priority of the second response information, the terminal device does not send the first response information to the network device, and sends the second response information to the network device on the second time-frequency resource. The second response information is an acknowledgement. Correspondingly, when the network device does not receive the first response information on the first time-frequency resource, the network device determines that the first response information is a negative acknowledgement, and receives the second response information on the second time-frequency resource.

To resolve a problem existing in the manner of skipping an HARQ-ACK, refer to example 9 and example 10 in this embodiment provided in this application.

In example 9 and example 10, the first response information may be an acknowledgement or a negative acknowledgement.

Example 9: If the transmission status of the first response information is the second state, where the second state satisfies condition 3 or condition 4, and regardless of whether the first response information is an acknowledgement or a negative acknowledgement, the terminal device does not send the first response information to the network device. In this case, the network device does not receive the first response information from the terminal device, either.

According to the method described in this example, regardless of whether the first response information is an acknowledgement or a negative acknowledgement, a feedback is not sent. Therefore, uplink transmit power is reduced, a waste of uplink resources is reduced, and interference to surrounding terminal devices is reduced. In addition, the network device does not need to perform blind detection, thereby reducing a waste of detection resources.

Example 10: When the transmission status of the first response information is the first state, the terminal device sends the first response information to the network device. In this case, the network device also receives the first response information from the terminal device.

When the first uplink information is different information, the solution in example 10 is described in detail below.

Embodiment 11: The first uplink information is the second response information, the second response information is the response information of the second downlink data, and the second downlink data is dynamically scheduled. The transmission status of the first response information is the first state, and the first state satisfies condition 1 or condition 2. In this case, the terminal device normally sends the first response information to the network device, regardless of whether the first response information is a negative acknowledgement or an acknowledgement. Therefore, the network device determines to receive the first response information of the first downlink data, and receives the second response information of the second downlink data.

It may be understood that, similar to Embodiment 2, Embodiment 11 is also applicable to a scenario in which response information of a plurality of pieces of first downlink data transmitted in the SPS manner needs to be fed back with response information of dynamically scheduled second downlink data.

For specific implementation, applicable scenarios, technical problems that can be resolved, and beneficial effects that can be achieved by Embodiment 11, refer to Embodiment 2. Details are not described herein again.

Embodiment 12: The first uplink information is the uplink data information. The transmission status of the first response information is the first state, and the first state satisfies condition 1. In other words, the response information of the first downlink data transmitted in the SPS manner is transmitted on the PUSCH for carrying the uplink data information. In this case, the terminal device does not use the manner of skipping an HARQ-ACK, and feeds back the response information based on an actual decoding result, regardless of whether the downlink data transmitted in the SPS manner is correctly decoded. In other words, the terminal device normally feeds back the first response information of the first downlink data, regardless of whether the first response information is a negative acknowledgement or an acknowledgement. Therefore, the network device determines to receive the first response information and the uplink data information on the PUSCH.

For specific implementation, applicable scenarios, technical problems that can be resolved, and beneficial effects that can be achieved by Embodiment 12, refer to Embodiment 3. Details are not described herein again.

It may be understood that, to implement functions in the foregoing embodiments, the network device and the terminal device include corresponding hardware structures and/or software modules for performing the functions. A person skilled in the art should be easily aware that, with reference to the units and method steps in the examples described in the embodiments disclosed in this application, this application can be implemented in a form of computer software, hardware, or a combination of hardware and computer software. Whether a function is performed by hardware or hardware driven by computer software depends on particular application scenarios and design constraints of the technical solutions.

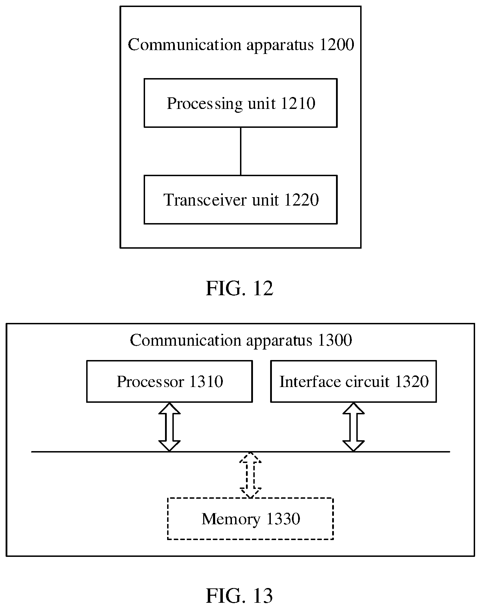

FIG. 12 and FIG. 13 are schematic diagrams of structures of possible communication apparatuses according to the embodiments of this application. These communication apparatuses can be configured to implement functions of the terminal device or the network device in the foregoing method embodiments, and therefore can also implement beneficial effects of the foregoing method embodiments. In the embodiments of this application, the communication apparatus may be any one of the terminals 1 to 5 shown in FIG. 1, may be the network device shown in FIG. 1, or may be a module (for example, a chip) applied to the terminal device or the network device.

As shown in FIG. 12, a communication apparatus 1200 includes a processing unit 1210 and a transceiver unit 1220. The communication apparatus 1200 is configured to implement functions of the terminal device or the network device in the method embodiment shown in FIG. 8.

When the communication apparatus 1200 is configured to implement the functions of the terminal device in the method embodiment shown in FIG. 8, the transceiver unit 1220 is configured to receive first downlink data from a network device. The processing unit 1210 is configured to determine, based on a transmission status of first response information of the first downlink data, whether to send the first response information to the network device.

When the communication apparatus 1200 is configured to implement the functions of the network device in the method embodiment shown in FIG. 8, the transceiver unit 1220 is configured to send first downlink data to a terminal device. The processing unit 1210 is configured to determine, based on a transmission status of first response information, whether to receive the first response information from the terminal device.

For more detailed descriptions of the processing unit 1210 and the transceiver unit 1220, directly refer to related descriptions of the method embodiment shown in FIG. 8. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required for running the instructions by the processor 1310, or store data generated after the processor 1310 runs the instructions.

When the communication apparatus 1300 is configured to implement the method shown in FIG. 8, the processor 1310 is configured to perform a function of the processing unit 1210, and the interface circuit 1320 is configured to perform a function of the transceiver unit 1220.

When the communication apparatus is a chip applied to a terminal device, the chip of the terminal device implements the functions of the terminal device in the foregoing method embodiments. The chip of the terminal device receives information from another module (for example, a radio frequency module or an antenna) in the terminal device, where the information is sent by a network device to the terminal device. Alternatively, the chip of the terminal device sends information to another module (for example, a radio frequency module or an antenna) in the terminal device, where the information is sent by the terminal device to a network device.

When the communication apparatus is a chip applied to a network device, the chip of the network device implements the functions of the network device in the foregoing method embodiments. The chip of the network device receives information from another module (for example, a radio frequency module or an antenna) in the network device, where the information is sent by a terminal device to the network device. Alternatively, the chip of the network device sends information to another module (for example, a radio frequency module or an antenna) in the network device, where the information is sent by the network device to a terminal device.

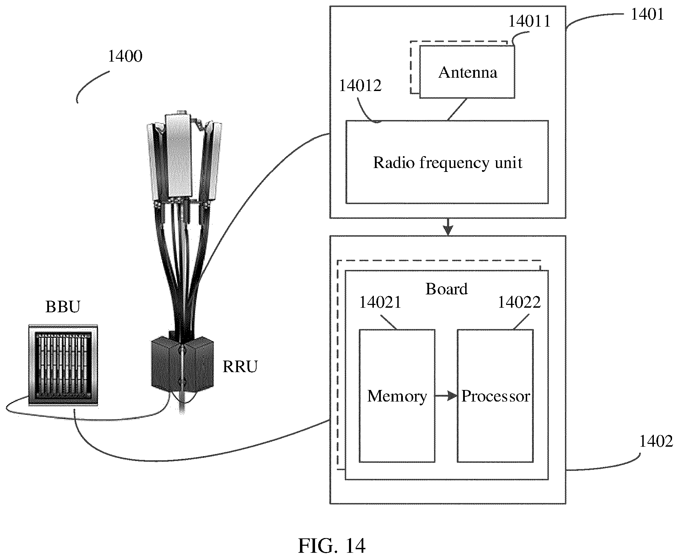

As shown in FIG. 14, this application further provides a schematic diagram of a structure of a network device, for example, a base station. The base station may be applied to the scenario of the communication system shown in FIG. 1, and the base station may be the network device in the procedure shown in FIG. 8.

Specifically, the base station 1400 may include one or more radio frequency units, for example, a remote radio unit (remote radio unit, RRU) 1401 and one or more baseband units (baseband units, BBUs) 1402. The RRU 1401 may be a transceiver unit, a transceiver machine, a transceiver circuit, a transceiver, or the like, and may include a radio frequency unit 14012. Optionally, the RRU 1401 may further include at least one antenna 14011. The RRU 1401 may be configured to send and receive a radio frequency signal and perform conversion between the radio frequency signal and a baseband signal. The BBU 1402 part may be configured to: perform baseband processing, control the base station, and the like. The RRU 1401 and the BBU 1402 may be integrated into one device, or may be two independent devices, that is, distributed base stations.

The BBU 1402 is a control center of the base station, may also be referred to as a processing unit, and is configured to complete a baseband processing function such as channel coding, multiplexing, modulation, and spectrum spreading. For example, the BBU may be configured to control the base station to perform the method in the procedure shown in FIG. 8.

In an example, the BBU 1402 may include one or more boards, and the plurality of boards may jointly support a radio access network of a single access standard, or may separately support radio access networks of different access standards, or simultaneously support a plurality of radio access networks of different access standards. The BBU 1402 may further include a memory 14021 and a processor 14022. The memory 14021 is configured to store necessary instructions and data. The processor 14022 is configured to control the base station to perform a necessary action.

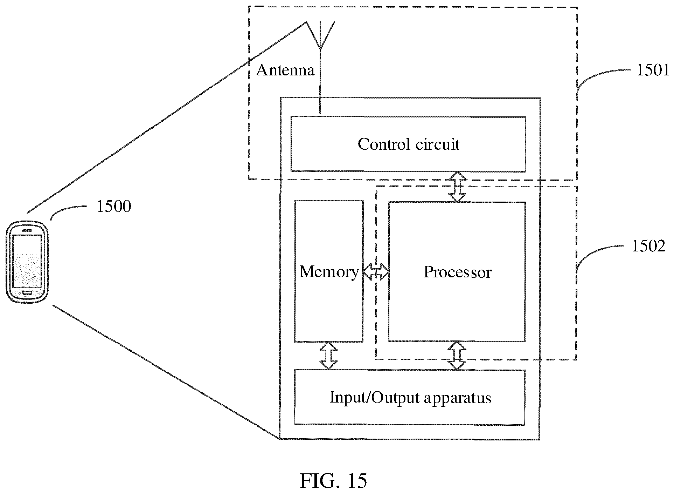

As shown in FIG. 15, this application further provides a schematic diagram of a structure of a terminal device 1500. The terminal device 1500 may be configured to implement the functions of the terminal device in the method shown in FIG. 8. For ease of description, FIG. 15 shows only main components of the terminal device 1500. As shown in FIG. 15, the terminal device 1500 may include a processor 1502, a memory, and a control circuit 1501, and optionally, may further include an antenna and/or an input/output apparatus. The processor may be configured to: process a communication protocol and communication data, control user equipment, and execute a software program. The memory may store the software program and/or the data. The control circuit may be configured to: perform conversion between a baseband signal and a radio frequency signal, and process the radio frequency signal. The control circuit and the antenna together may also be referred to as a transceiver, and may be configured to receive and send a radio frequency signal. The input/output apparatus such as a touchscreen, a display, or a keyboard may be configured to receive data entered by a user and output data to the user.

It may be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in the embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a network device or a terminal device. Certainly, the processor and the storage medium may exist in a network device or a terminal device as discrete components.

All or some of the foregoing embodiments may be implemented through software, hardware, firmware, or any combination thereof. When the software is used to implement the embodiments, all or some of the embodiments may be implemented in a form of a computer program product. The computer program product includes one or more computer programs or instructions. When the computer programs or instructions are loaded and executed on the computer, the procedure or functions according to the embodiments of this application are all or partially generated. The computer may be a general-purpose computer, a special-purpose computer, a computer network, or other programmable apparatuses. The computer programs or instructions may be stored in a computer-readable storage medium, or may be transmitted by using the computer-readable storage medium. The computer-readable storage medium may be any usable medium accessible by a computer, or a data storage device, such as a server, integrating one or more usable media. The usable medium may be a magnetic medium, for example, a floppy disk, a hard disk, or a magnetic tape; or may be an optical medium, for example, a DVD; or may be a semiconductor medium, for example, a solid-state drive (solid-state drive, SSD).

In the embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

## Claims

1. A response information transmission method, comprising:
receiving first downlink data from a network device, wherein the first downlink data is transmitted in a semi-persistent scheduling manner; and
determining, based on a transmission status of first response information of the first downlink data, whether to send the first response information to the network device, wherein
the transmission status of the first response information comprises a first state and a second state, the first state represents that the first response information and first uplink information are to be simultaneously transmitted in a first time unit, and the second state represents that the first response information is to be separately transmitted in the first time unit.

2. The method according to claim 1, wherein
the first state is a state that satisfies either of the following conditions:
a first time-frequency resource used to transmit the first response information overlaps a second time-frequency resource used to transmit the first uplink information in time domain, wherein the first uplink information is second response information or to-be-sent uplink data information, and the second response information is response information of second downlink data; or
the first response information and the first uplink information are transmitted by using a same codebook, wherein the first uplink information is the second response information; and
the second state is a state that satisfies either of the following conditions:
the first time-frequency resource and the second time-frequency resource do not overlap in time domain, wherein the first uplink information is the second response information or the to-be-sent uplink data information; or
only the first response information is to be transmitted in the first time unit.

3. The method according to claim 1 or 2, wherein the determining, based on a transmission status of first response information of the first downlink data, whether to send the first response information to the network device comprises:
when the transmission status of the first response information is the second state, determining not to send the first response information to the network device.

4. The method according to any one of claims 1 to 3, wherein the determining, based on a transmission status of first response information of the first downlink data, whether to send the first response information to the network device comprises:
when the transmission status of the first response information is the first state, determining to send the first response information to the network device.

5. The method according to any one of claims 1 to 3, wherein the first uplink information is the second response information, the second response information is the response information of the second downlink data, and the determining, based on a transmission status of first response information of the first downlink data, whether to send the first response information to the network device comprises:
when the first time-frequency resource used to transmit the first response information overlaps the second time-frequency resource used to transmit the second response information in time domain, and a priority of the first response information is higher than a priority of the second response information, sending the first response information to the network device on the first time-frequency resource, and skipping sending the second response information to the network device.

6. The method according to any one of claims 3 to 5, wherein the first response information is an acknowledgement.

7. The method according to any one of claims 1 to 3, wherein the first uplink information is the second response information, and the second response information is the response information of the second downlink data; and
the determining, based on a transmission status of first response information of the first downlink data, whether to send the first response information to the network device comprises:
when the first time-frequency resource used to transmit the first response information overlaps the second time-frequency resource used to transmit the second response information in time domain, sending the first response information and the second response information to the network device on a third time-frequency resource, wherein at least one of the first response information and the second response information is an acknowledgement.

8. The method according to any one of claims 1 to 3, wherein the first uplink information is the second response information, and the second response information is the response information of the second downlink data; and
the determining, based on a transmission status of first response information of the first downlink data, whether to send the first response information to the network device comprises:
when the first time-frequency resource used to transmit the first response information overlaps the second time-frequency resource used to transmit the second response information in time domain, a priority of the first response information is higher than a priority of the second response information, and the first response information is an acknowledgement, skipping sending the first response information to the network device, and sending the second response information to the network device on the second time-frequency resource.

9. A response information transmission method, comprising:
sending first downlink data to a terminal device, wherein the first downlink data is transmitted in a semi-persistent scheduling manner; and
determining, based on a transmission status of first response information, whether to receive the first response information from the terminal device, wherein the first response information is response information of the first downlink data, wherein
the transmission status of the first response information comprises a first state and a second state, the first state represents that the first response information and first uplink information are to be simultaneously transmitted in a first time unit, and the second state represents that the first response information is to be separately transmitted in the first time unit.

10. The method according to claim 9, wherein
the first state is a state that satisfies either of the following conditions:
a first time-frequency resource used to transmit the first response information overlaps a second time-frequency resource used to transmit the first uplink information in time domain, wherein the first uplink information is second response information or to-be-sent uplink data information, and the second response information is response information of second downlink data; or
the first response information and the first uplink information are transmitted by using a same codebook, wherein the first uplink information is the second response information; and
the second state is a state that satisfies either of the following conditions:
the first time-frequency resource and the second time-frequency resource do not overlap in time domain, wherein the first uplink information is the second response information or the to-be-sent uplink data information; or
only the first response information is to be transmitted in the first time unit.

11. The method according to claim 9 or 10, wherein the determining, based on a transmission status of first response information of the first downlink data, whether to receive the first response information from the terminal device comprises:
when the transmission status of the first response information is the second state, determining not to receive the first response information from the terminal device.

12. The method according to any one of claims 9 to 11, wherein the determining, based on a transmission status of first response information of the first downlink data, whether to receive the first response information from the terminal device comprises:
when the transmission status of the first response information is the first state, determining to receive the first response information from the terminal device.

13. The method according to any one of claims 9 to 11, wherein the first uplink information is the second response information, the second response information is the response information of the second downlink data, and the determining, based on a transmission status of first response information of the first downlink data, whether to receive the first response information from the terminal device comprises:
when the first time-frequency resource used to transmit the first response information overlaps the second time-frequency resource used to transmit the second response information in time domain, and a priority of the first response information is higher than a priority of the second response information, receiving the first response information from the terminal device on the first time-frequency resource, and skipping receiving the second response information from the terminal device on the second time-frequency resource.

14. The method according to any one of claims 11 to 13, wherein the first response information is an acknowledgement.

15. The method according to any one of claims 9 to 11, wherein the first uplink information is the second response information, and the second response information is the response information of the second downlink data; and
the determining, based on a transmission status of first response information of the first downlink data, whether to receive the first response information from the terminal device comprises:
when the first time-frequency resource used to transmit the first response information overlaps the second time-frequency resource used to transmit the second response information in time domain, receiving the first response information and the second response information from the terminal device on a third time-frequency resource, wherein at least one of the first response information and the second response information is an acknowledgement.

16. The method according to any one of claims 9 to 11, wherein the first uplink information is the second response information, and the second response information is the response information of the second downlink data sent to the terminal device; and
the determining, based on a transmission status of first response information of the first downlink data, whether to receive the first response information from the terminal device comprises:
when the first time-frequency resource used to transmit the first response information overlaps the second time-frequency resource used to transmit the second response information in time domain, and a priority of the first response information is higher than a priority of the second response information, and when the first response information from the terminal device is not received on the first time-frequency resource, determining that the first response information is an acknowledgement, and receiving the second response information from the terminal device on the second time-frequency resource.

17. A communication apparatus, comprising a processor and a memory, wherein
the memory is configured to store computer instructions; and
the processor is configured to execute the computer instructions stored in the memory, to enable the communication apparatus to implement the method according to any one of claims 1 to 16.

18. A communication apparatus, comprising a module configured to perform the method according to any one of claims 1 to 8 or claims 9 to 16.

19. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 8 or claims 9 to 16 by using a logic circuit or by executing code instructions.

20. A computer-readable storage medium, wherein the storage medium stores computer instructions; and when the computer instructions are executed by a communication apparatus, the communication apparatus is enabled to perform the method according to any one of claims 1 to 16.

21. A computer program product, wherein the computer program product comprises computer instructions; and when the computer instructions are executed by a communication apparatus, the communication apparatus is enabled to perform the method according to any one of claims 1 to 16.
